# EUROPEAN PATENT APPLICATION

(11) **EP 2 023 544 A1**
(43) Date of publication of application: **11.02.2009**
(21) Application number: 07015401.8
(22) Date of filing: 06.08.2007
(51) Int. Cl.: H04L 12/46

(54) **Method and device for distributing address information and communication system comprising such device**

(71) Applicant: Nokia Siemens Networks Oy, 02610 Espoo (FI)
(72) Inventor: Gruber, Claus, 80336 München (DE); Riedl, Johannes, 84030 Ergolding (DE)
(74) Representative: Bruglachner, Thomas E.

(57) **Abstract**

A method and a device for distributing address information in a network are provided, comprising a first border network element and at least one second border network element, the method comprising the step: Upon receipt of the address information at the first border network element, the address information is made available to the at least one second border network element.

## Description

The invention relates to a method and to a device for distributing address information and to a communication system comprising such a device.

Next to IP services VPN business services are generating more and more traffic and revenue for network providers. In particular, Ethernet services (E-Line and E-LAN) are evolving. Today, these layer 2 services are mostly transported via layer 3 IP/MPLS tunnels emulating layer 2 technologies.

The complex functionalities and protocols of layer 3 are often not required to transport pure layer 2 services throughout a network. Traffic can be transported on a layer 2 infrastructure without any need of complex data transformations and changes in the functional layer structure.

Additionally, a layer 2 interconnection can be provided for end-to-end layer 2 services.

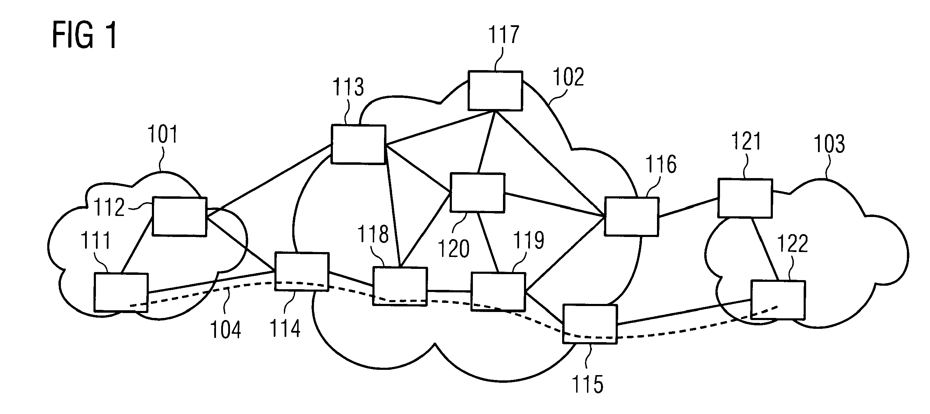

**Fig.1** shows a network structure enabling pure layer 2 transport.

A first network 101 comprises border switches 111 and 112 that are connected with each other. A network 102 comprises border switches 113 to 117 and internal switches 118 to 120. In addition, a third network 103 comprises border switches 121 and 122. The connections of the switches with one another are as follows:

| Switch ... | is further connected to switch(es) ... |
|---|---|
| 111 | 112, 114 |
| 112 | 113, 114 |
| 113 | 117, 118, 120 |
| 114 | 118 |
| 115 | 119, 122 |
| 116 | 117, 119, 120, 121 |
| 117 | 120 |
| 118 | 119, 120 |
| 119 | 120 |
| 121 | 122 |

Data packets between two remote locations, e.g. between switch 111 and switch 122, can be transported through one or several core networks.

Since the internal structure of a network may not be made available to other networks, a hierarchical routing is required and performed. Hence, each network has a view of its own topology and uses an own routing protocol inside.

Regarding connection-oriented Ethernet forwarding (e.g., PBB-TE, VLAN-XC or T-MPLS), a border switch determines the route between an ingress and an egress switch and labels an incoming packet accordingly. The packet is then forwarded through the particular network according to the label information.

In Fig.1, a path 104 depicts the data flow from switch 111 to switch 122.

To forward an incoming packet through a network and towards its destination, it has in particular to be considered to which egress device (e.g., switches 115, 116 or 117) a packet shall be sent if it is received at an incoming border device, e.g., at switch 114.
One approach to solve this issue is to build a loop-less forwarding structure between all border devices (e.g. with STP, RSTP or MSTP) and to learn MAC addresses of neighboring devices by standard MAC learning. A learning bridge learns a source MAC address of each received packet and stores it. Future packets destined to the same address can be directly forwarded only by the bridge interface on which that address has been stored. Packets destined for unrecognized addresses are forwarded (i.e. broadcasted) via all bridge interfaces. MAC address learning is defined in the IEEE 802.1 standard. However, every device of the network has to learn MAC addresses independently from each other. In particular, there are too many MAC addresses of remote destinations to cost efficiently store them all.

The **problem** to be solved is to overcome the disadvantages as set forth above and in particular to allow an efficient routing throughout a network.

This problem is solved according to the features of the independent claims. Further embodiments result from the depending claims.

In order to overcome this problem, a method for distributing address information in a network comprising a first border network element and at least one second border network element, the method comprising the step:
- upon receipt of the address information at the first border network element, the address information is made available to the at least one second border network element.

In particular, a border network element is a network element at the border of the network, i.e. a network element that is connected and/or has access to at least one additional network element that is not part of this network.
Pursuant to this approach, the border network elements of the network can access the address information. Thus, this address information made available can be utilized for routing purposes.

Advantageously, only network elements at the border of the network care about the address information, whereas to network elements within the network any address information relating to originators or receivers of traffic that are located outside the current network does not have to be revealed.

This approach hence improves the efficiency of routing layer 2 traffic as not all network elements of a particular network need to map addresses that are located outside this particular network.

In an embodiment, the address information comprises a layer 2 information, in particular a MAC address.

It is also possible that such address information relates to other communication models or layers in order to utilize this approach for, e.g., optical networks, optical tunnels or IP in general.

The address information may further comprise a status information and/or a reachability information. Such information can also relate to characteristics. The reachability information or characteristics may be (explicitly) withdrawn, in particular if a routing changes or needs to be updated.

In another embodiment, the first border network element and/or the at least one second border network element are of the following type:
- a switch;
- a bridge;
- a router;
- a gateway.

In a further embodiment, the address information is made available to the at least one second border network element by transmitting the address information to the at least one second border network element.

Hence, the address information may in particular be transmitted and/or distributed by the first border network element to all second border network elements. Accordingly, the address information received at the first border network element is then known at all second border network elements and such addressee connected to this particular address information can be accessed from all second border network elements via the first border network element.

In a next embodiment, the address information is made available to the at least one second border network element by storing it in a database that is accessible in particular to the border network elements.

It is also an embodiment that the database is arranged centralized or decentralized in particular as a (distributed) memory space.

Hence, the address information can be stored at a particular database that may be located within a network element, in particular a border network element and/or a central storage. However, the database may also be distributed among several network elements and/or storage media.

Pursuant to another embodiment, the address information is made available by the first border network element to an at least one third border network element of a further network. This may in particular be done via an information exchange protocol.

Thus, border network elements of different networks may communicate and/or distribute address information. Applying the approach as presented herein, the access to address information may only be relevant for border network elements, i.e. network elements at the border to an entity outside the respective network. The inner network elements do not have to care about outside address information.

According to an embodiment, the address information can be provided and/or made available in advance, together with or independently from information to be exchanged.
For example, the address information can be exchanged via the information exchange protocol independently from or together with the actual user traffic.

The problem stated supra is also solved by a device for distributing address information comprising a processor unit that is arranged such that the method as described herein is executable on said processor unit.

According to another embodiment, said device is a communication device, in particular of the following type:
- a switch;
- a bridge;
- a router;
- a gateway.

The problem state above is further solved by a communication system comprising the device as described herein.

Embodiments of the invention are shown and illustrated in the following figures:
- Fig.2: shows a network diagram comprising border network elements and core network elements, wherein upon receipt of an address information at a border network element, such address information is conveyed to all other border network elements of this network;
- Fig.3: shows the network diagram of Fig.2 in combination with a further network, wherein address information is conveyed throughout the networks thereby distributing reachability information to border network elements of several networks;
- Fig.4: shows a flow chart comprising steps of a method for distributing address information in at least one network.

A drawback of MAC address learning is that an address can only be learned by a switch if a packet traverses the switch itself and it has to be learned by every switch independently from any other switch.

Additionally, only one path can be chosen between two locations (pursuant to the spanning tree calculated).

The approach provided herewith allows such learning only for network elements at the border of a network (also referred to as "border network elements").

When using connection-oriented switching inside a network, paths between border network elements can be set up in advance or on demand. Information about possible routes, i.e. where a packet should leave the network and which route has to be chosen inside the network, can be determined by a border network element for every incoming packet with known egress border device (addressee or destination address).
The packet can be encoded and transported to the egress border network element by utilizing a path through the particular network, said path being assigned a path-label.

Thus, within a network no information about a reachability of an external MAC address is required and in particular no MAC address learning is necessary for the network elements within the network (i.e. network elements that are not located at the border of the network).

It is a particular advantage of the approach presented that learning of address information, in particular of layer 2 address information like, e.g., MAC addresses, can only be performed once.

An automatic distribution of address information is suggested, i.e. an external MAC address is received at a border network element, hence a network element outside the actual network carrying this particular MAC address can be reached via this border network element. In other words, the border network element learns the MAC address of a network element outside the actual network. This learned address information can be automatically distributed to all relevant border network element, in particular to border switches, of the current network (i.e. of the same domain).

Alternatively, the address information can be stored (centralized or decentralized) in a memory (space), that may in particular be organized as a database. Said database shall be accessible by all border network elements, if needed.

The data can be stored in a distributed manner among several databases and/or network elements, in particular border network elements. For such distributed storing of data, a CHORD mechanism may be applied (see [1] for further details on CHORD).

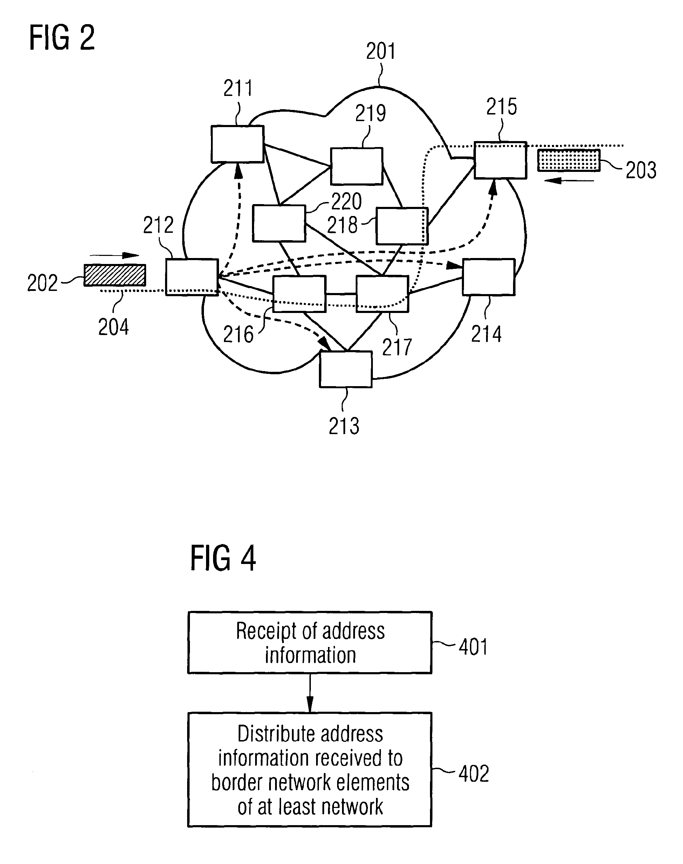

**Fig.2** shows a network 201 comprising border network elements 211 to 215 that may be connected to other entities outside of the network 201. Network elements 216 to 220 are located within the network 201.

The network elements 211 to 220 may be switches, in particular for switching layer 2 information.

The connections of the network elements (NEs) shown are as follows:

| NE ... | is further connected to NE(s) ... |
|---|---|
| 211 | 219, 220 |
| 212 | 216 |
| 213 | 216, 217 |
| 214 | 217 |
| 215 | 218 |
| 216 | 217, 220 |
| 217 | 218, 220 |
| 218 | 219 |

Upon receipt of address information 202, the border network element 212 distributes said address information 202 to all other border network elements 211, 213, 214 and 215 (see dashed lines with arrows in Fig.2). After distribution of the address information 202 which may in particular be or comprise a MAC address of a network element outside the network 201, all border network elements know that this network element with address information 202 can be reached via the border network element 212.

If the border network element 215 receives a data packet 203 to be destined for said address information 202, the learned address information will be looked up in the MAC cache either at the border network element 215 or at a distributed database. Next, a path 204 between the border network element 215 and the border network element 212 will be chosen and the packet to be conveyed to the border network element 212 is labeled accordingly (i.e. the label corresponding to the path 204 is used to transfer said data through the network 201). According to such labeling scheme, the network elements 216 to 220 inside the network 201 can route traffic according to the path label and thus no MAC address learning (address information of entities outside the network 201) is required for the core network elements 216 to 220.

In addition, learning of address information can be performed by exchanging messages between border network elements of different networks, i.e. of different domains.

Hence, it is an extension of this approach not to learn reachability information when a packet traverses a border network element, but to use an information exchange protocol between border network elements of different domains to exchange reachability information between such border network elements.

The border network elements of different domains can thus exchange connectivity information - i.e. which destination addresses can be reached via a connected border network element - with each other. This information exchange can be performed in advance of sending any packets or if new information is (to be) made available.

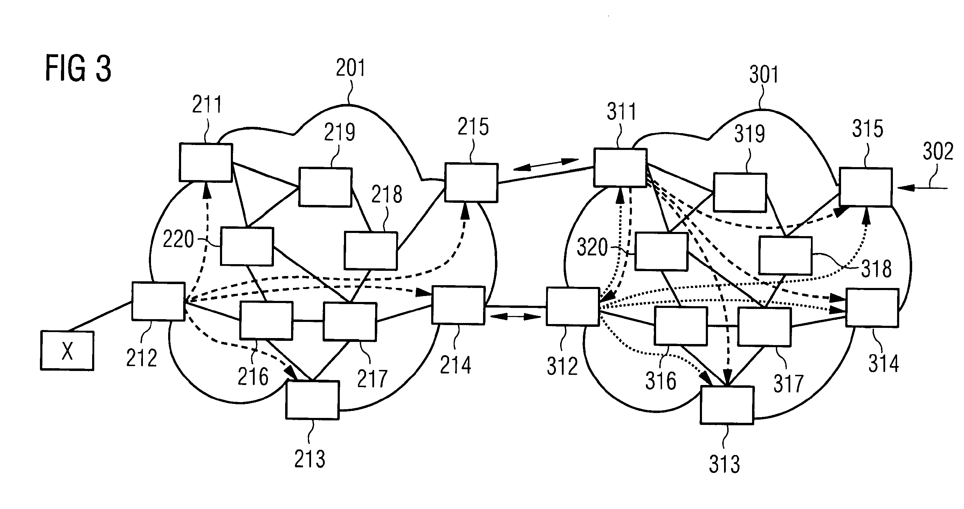

**Fig.3** shows an example for exchanging of learned address information between different networks 201 and 301.

The network 201 corresponds to Fig.2, the network 301 has a similar structure, i.e. it comprises border network elements 311 to 315 and core network elements 316 to 320.

The network elements, in particular the border network elements may be realized as switches forwarding in particular layer 2 traffic.

The connections of the network elements (NEs) within the network 301 are as follows:

| NE ... | is further connected to NE(s) ... |
|---|---|
| 311 | 319, 320 |
| 312 | 316 |
| 313 | 316, 317 |
| 314 | 317 |
| 315 | 318 |
| 316 | 317, 320 |
| 317 | 318, 320 |
| 318 | 319 |

A network element X comprising a MAC address is located outside the network 201 and it is connected to the border network element 212.

Further, border network element 215 is connected with border network element 311 and border network element 214 is connected with border network element 312.

As the border network element 212 learns the MAC address of the network element X, it distributes this MAC address to all border network elements 213, 214, 215 and 211 of the first network 201 (as shown by the dashed lines with arrows).

The border network element 214 distributes MAC addresses of (all) network elements or entities that are able to send and to receive information to the border network element 312 thereby in particular conveying the information "network element X can be reached via border network element 214". Accordingly, the border network element 215 distributes address information to the border network element 311 thereby in particular conveying the information "network element X can be reached via border network element 215".

The border network element 312 distributes the learned MAC addresses to the border network elements 311, 313, 314 and 315 of the second network 301, thereby conveying in particular the information "network element X can be reached via border network element 312".

However, different routes may be chosen according to a route prioritization that can be set up prior in advance or during runtime of the system (e.g., by means of traffic engineering).

Accordingly, the border network element 311 distributes the learned MAC addresses to the border network elements 312 to 315, thereby conveying in particular the information "network element X can be reached via border network element 311".

An arrow 302 indicates an incoming packet at the border network element 315 destined to the network element X. The MAC address is looked up in a memory (cache) at the border network element 315 (alternatively, it may be looked up in a distributed memory, e.g., a distributed database). A route from the border network element 315 to either the border network element 311 or the border network element 312 is selected (picking the preferred route can be a result of traffic engineering). According to the route chosen, the packets are labeled accordingly and are conveyed to either the border network element 311 or to the border network element 312. From there, the packets are forwarded to either the border network element 215 or to the border network element 214 and are further routed (tunneled) to the border network element 212 and from there sent to the network element X.

Advantageously, according to this approach the MAC addresses are each learned only once and they can be learned without substantial delay by all border switches. Thus, flooding of packets (broadcast) is reduced.

Additionally, according to suitable traffic engineering mechanisms, different or multiple paths can be chosen to transport a packet (several packets) between two locations, since the information through which border network element a MAC address is reachable can be controlled by an information distribution and decision mechanism.

Another advantage of the approach becomes apparent in case of a failure. If a MAC address is no longer reachable by a border network element, the route can be withdrawn without any substantial delay and information about such withdrawal can be made available nearly immediately to all border network elements. This allows facilitation of traffic engineering and resilience in an effective manner.

The extension to exchange information between border network elements of different domains further reduces the requirement of flooding of address information. Thus, redundant resilience paths and fine-tuning of reachability information between domains/providers (traffic flow control) can be conducted by this approach.

One possibility to realize the distributed learning of MAC addresses is to use a BGP (Border Gateway Protocol). In this case, MAC address reachability information is communicated between the border network elements through BGP sessions: Advantageously, a new NLRI (Network Layer Reachability Information) can be defined. Then, similar to private IP addresses belonging to provider-provisioned layer 3 VPNs such NLRI can be communicated between PE (Provider Edge) routers and MAC addresses belonging to a provider-provisioned layer 2 service that may be exchanged between the border network elements of the providers.

**Fig.4** shows a flow chart comprising steps of a method for distributing address information throughout at least one network.

Upon receipt of address information (step 401) at a first border network element, this first border network element distributes said address information to at least one second border network element of at least one network (step 402).

It is to be noted that several networks (or domains) can be subject to such distribution of address information (e.g., MAC addresses) learned at the first border network element. In particular one second border network element at the edge to another network may convey such information to a border network element of this subsequent network.

### Reference:

[1] Stoica et al.: Chord: A Scalable Peer-to-peer Lookup Service for Internet Applications, SIGCOMM'01, August 27-31, 2001, San Diego, CA, USA; see: http://pdos.csail.mit.edu/papers/chord:sigcomm01/

## Claims

1. A method for distributing address information in a network comprising a first border network element and at least one second border network element, the method comprising the following step:
- upon receipt of the address information at the first border network element, the address information is made available to the at least one second border network element.

2. The method according to claim 1, wherein the address information comprises at least one of the following:
- a layer 2 information;
- a MAC address;
- a status information;
- a reachability information.

3. The method according to any of the preceding claims, wherein the first border network element and/or the at least one second border network element are of the following type:
- a switch;
- a bridge;
- a router;
- a gateway.

4. The method according to any of the preceding claims, wherein the address information is made available to the at least one second border network element by transmitting the address information to the at least one second border network element.

5. The method according to any of the preceding claims, wherein the address information is made available to the at least one second border network element by storing it in a database that is accessible in particular to the border network elements.

6. The method according to claim 5, wherein the database is arranged centralized or decentralized.

7. The method according to any of the preceding claims, wherein the address information is made available by the first border network element to an at least one third border network element of a further network.

8. The method according to claim 7, wherein the address information is made available to the at least one third border network via an information exchange protocol.

9. The method according to any of claims 7 or 8, wherein the address information is made available in advance, together with or independently from an information to be exchanged.

10. The method according to any of the preceding claims, wherein

11. A device for distributing address information comprising a processor unit that is arranged such that the method according of any of the preceding claims is executable on said processor unit.

12. The device according to claim 11, wherein said device is a communication device, in particular of the following type:
- a switch;
- a bridge;
- a router;
- a gateway.

13. Communication system comprising the device according to any of claims 11 to 12.
